# EUROPEAN PATENT SPECIFICATION

(11) **EP 1 353 849 B1**
(45) Date of publication and mention of the grant of the patent: **08.06.2005**
(21) Application number: 01271309.5
(22) Date of filing: 20.12.2001
(51) Int. Cl.: B65C 3/06, B65C 9/24, B65C 9/26, F17C 13/00, B29C 61/00, B29C 63/42

(54) **DEVICE FOR THE HEAT SHRINKING OF THERMOPLASTIC SLEEVES ON GAS CYLINDERS**
VORRICHTUNG ZUM WÄRMESCHRUMPFEN VON THERMOPLASTISCHEN HÜLSEN AN GASZYLINDERN
DISPOSITIF POUR THERMORETRACTION DE MANCHONS THERMOPLASTIQUES SUR DES VERINS A GAZ

(30) Priority: 20.12.2000 PT 10254300
(43) Date of publication of application: 22.10.2003
(73) Proprietor: BP Portuguesa, S.A., P-1070-050 Lisboa (PT)
(72) Inventor: DOS SANTOS PIRES, Aniceto, P-4460 Guifoes (PT); MARTINS NEVES DOS SANTOS, Joao, Luis, P-2830 Barreiro (PT)
(74) Representative: Barros, Joao Carlos
(86) International application number: PCT/PT2001/000029
(87) International publication number: WO 2002/049922

(56) References cited:
- EP-A- 0 952 084
- DE-A- 19 642 696
- DE-U- 9 211 014
- US-A- 3 523 052
- US-A- 5 584 961
- US-A- 6 057 012

## Description

This invention relates to a device for the heat shrinking of thermoplastis sleeves on gas cylinders. The sleeves bear information about the nature of the product contained in the cylinder, as well as information about safety, handling and first aid in case of accidents.

Gas cylinders sold in Portugal are fitted with a detachable disc containing the said information. However, these discs sometimes fall off during transport and some cylinders are therefore sold not bearing the information required by law.

This invention solves the problem in an innovative way. It simultaneously ensures permanent provision of information, greater durability, 100% recycling and energy saving, which all contribute to greater economy and improved environmental protection.

### STATE OF THE ART

After conducting a market survey we concluded that the most efficient and long lasting method of attaching the information is the use of retractable polyurethane sleeves that almost totally cover the cylinder.

A number of methods exist for fitting these sleeves and they are used in various industries, for example for labelling soft drinks and for protecting products.

An International Search revealed the following relevant Patents:
US 6057012.of Culp Joseph and Belmont; DE 19642696 of Messer Grieshheim GmbH;
EP 0952084 of Cottet Michel; US 5584961 ofEllsworth Richard; US 35023052 of Bolen Kenneth and DE 9211014 of Arhoso-Spezialzangen GmbH. It also showed WO 9011223 of Bressendorf Ole. The first three documents are examples of use of shrinkable sleeves on gas cylinders.

None of these systems disclose a two twin units working simultaneously and discontinuously with two perforated semicylinders to exit the water vapour and involving totally the bottle but leaving the area of the valvule spared and the time exposure to the steam is reduced to only 0.7 seconds.

These systems employ heating by hot air or steam in tunnels to retract the sleeves. As well as being rather expensive, since they use electrical energy and/or steam continuously, these methods also result in a major loss of energy, which invariably contributes to increased levels of pollution and heating of the planet.

On the other hand, experience shows that applying this continuous flow steam tunnel technique directly is ill advised for gas cylinders due to the physical and chemical behaviour of the various materials. And not just the product in the cylinders but also the materials making up the actual cylinders and fittings, in particular, the steel body and the brass, along with the plastic, rubber and soft steel making up the valve.

This mix of materials, with such a different coefficients of expansion, constitutes a safety risk not only during cylinder filling but in terms of component ageing, i.e., loss of elasticity due to large temperature changes from 15/20C to 100/120°C and the length of exposure inside the steam tunnel, reckoned at 21 seconds for retracting each sleeve.

For some of the components, such as the valve O-rings, the temperatures reached are very close to the manufacturer's recommended yield point. This is a strong argument for not using a continuous flow steam tunnel.

The pressure of the gas in the cylinders, in a liquid state at pressures of between 2 bars for butane and 5 bars for propane, rises due to the sudden increase in temperature and consequently represents a safety risk at the filling station.

This invention, called a STEAM DRAGON, solves these problems, since it uses only non-polluting energy sources that are not a danger in highly explosive working areas:
- compressed air
- steam.

And the system works on a cylinder-by-cylinder basis that dramatically reduces the length of time each cylinder is exposed to the steam from 21 seconds to 0.7 seconds. This accounts for an energy saving of about 90% or more, and avoids injecting the steam directly into the cylinder's more sensitive parts, in particular the valve.

### EQUIPMENT

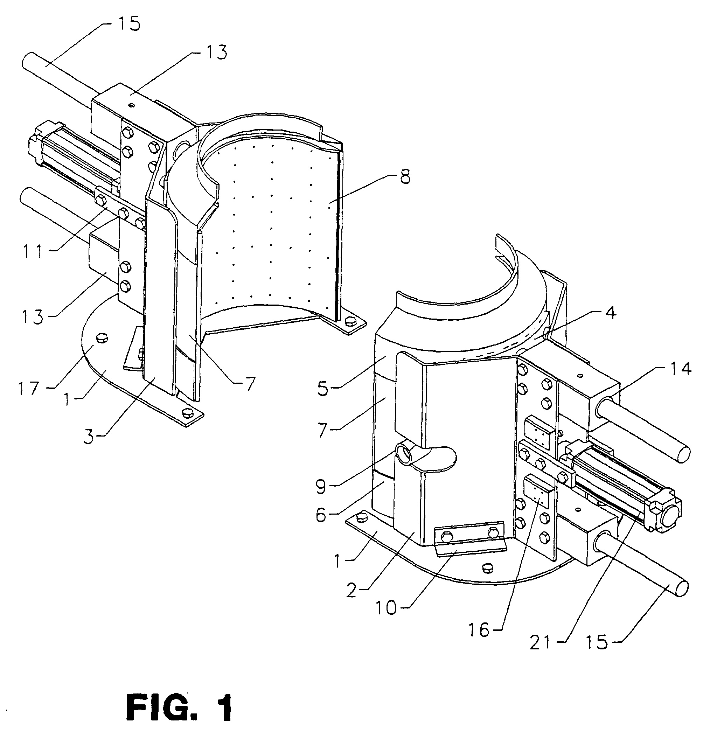

The Steam Dragon is basically comprised of two opposite twin units or subsystems (Fig.1), working simultaneously. Each unit is made up of a semicylinder or steam chamber (7) and a perforated metal plate (8) on the inside, acting as a steam outlet. The units join together when a cylinder passes, surrounding it almost completely and forming a steam or heating chamber while leaving the valve outside.

Each twin unit is fitted with a steam line consisting of an insulated cylinder and pipe with a hose to carry the steam to the consumption area, where it enters the equipment.

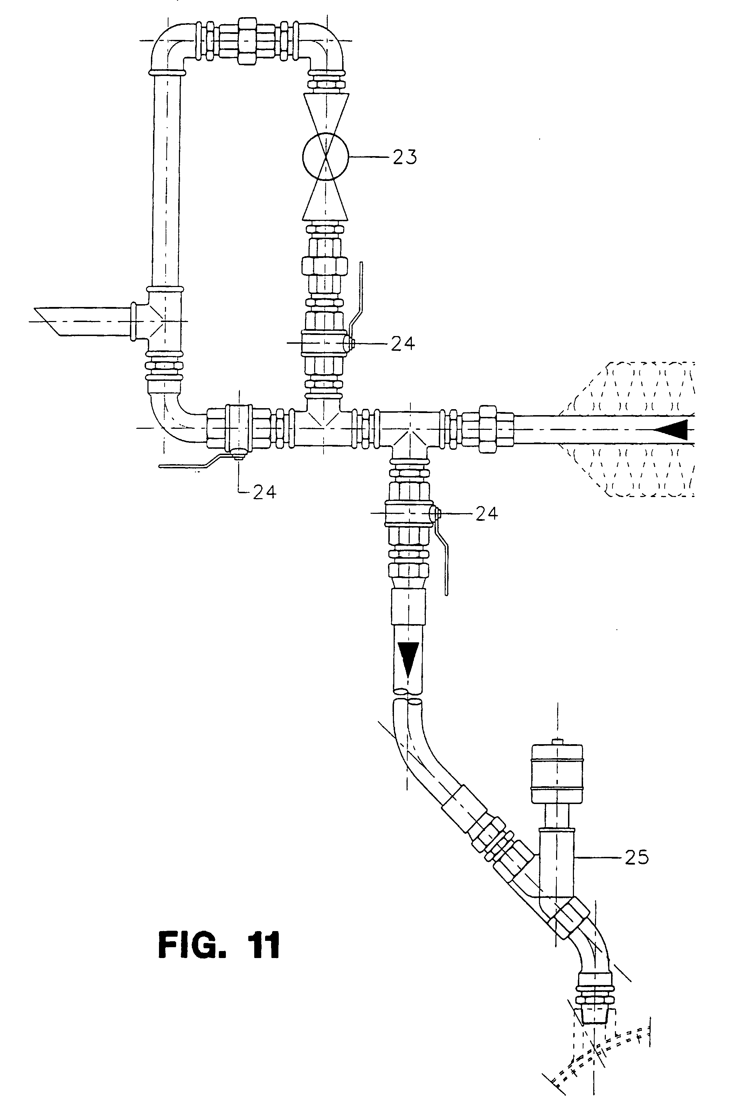

As the steam is produced discontinuously a condensation trap is incorporated in the steam line (Fig. 11).

Each unit consists of:
- base plate(1)
- left guard (2) of semicylinder with slit for fitting of steam line
- right guard (3) of semicylinder
- chamber support (4)
- steam chamber upper support (5)
- steam chamber lower support (6)
- steam chamber back end plate (7)
- steam chamber perforated plate (8)
- steam hose connector (9)
- piston (21)
- guiding shaft (15)

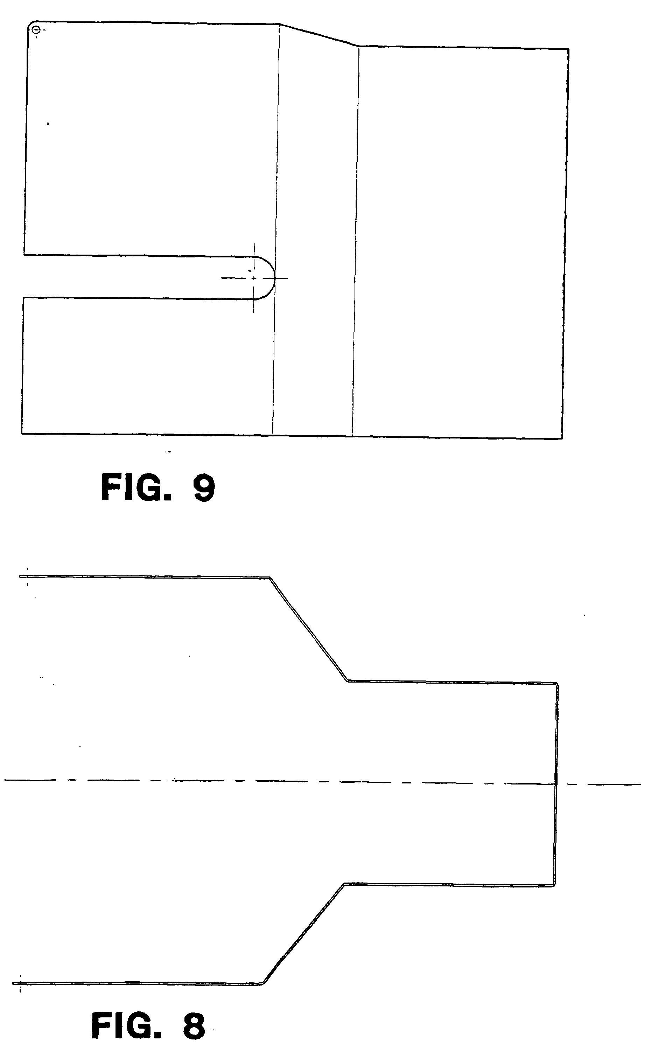

Each unit is fitted with a guard (Fig. 8 & 9) that completely covers it and contains a slit at the side for the steam line.

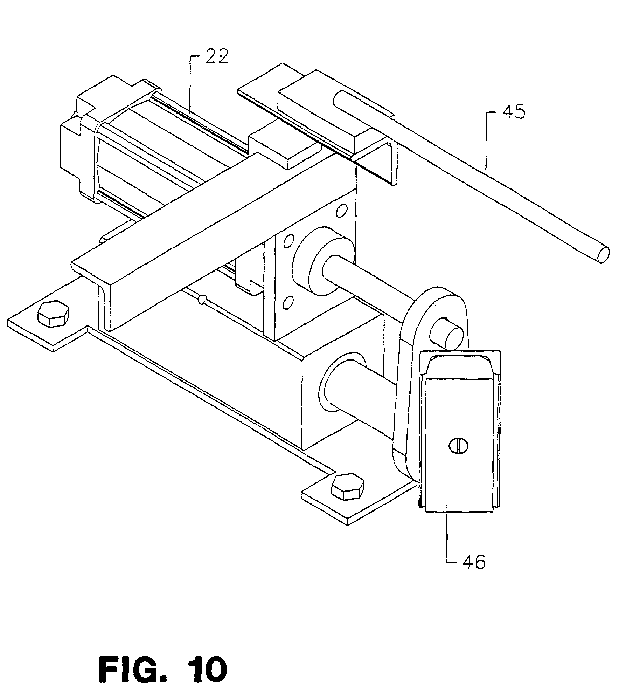

The equipment also consists of an infrastructure made up of a line for conveying the cylinders through the steam area, that includes a compressed air admission sensor to control, upstream, the flow of cylinders in the sleeve attaching area and, downstream, the admission into the steam area. The conveying line has a brake (Fig.10), fitted with a pneumatic piston (22), to hold the cylinder when another is already in the steam area.

The attached figures show:
FIG. 1 - Perspective of a twin units set

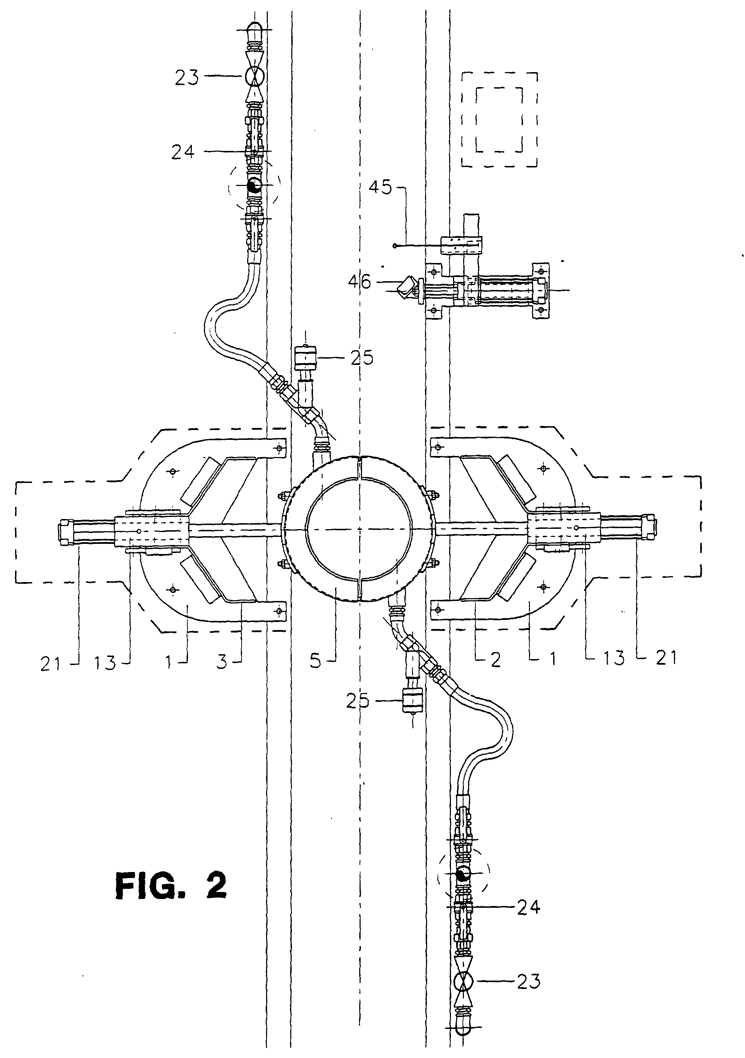

FIG. 2 - Plan of operating installation - during steaming phase

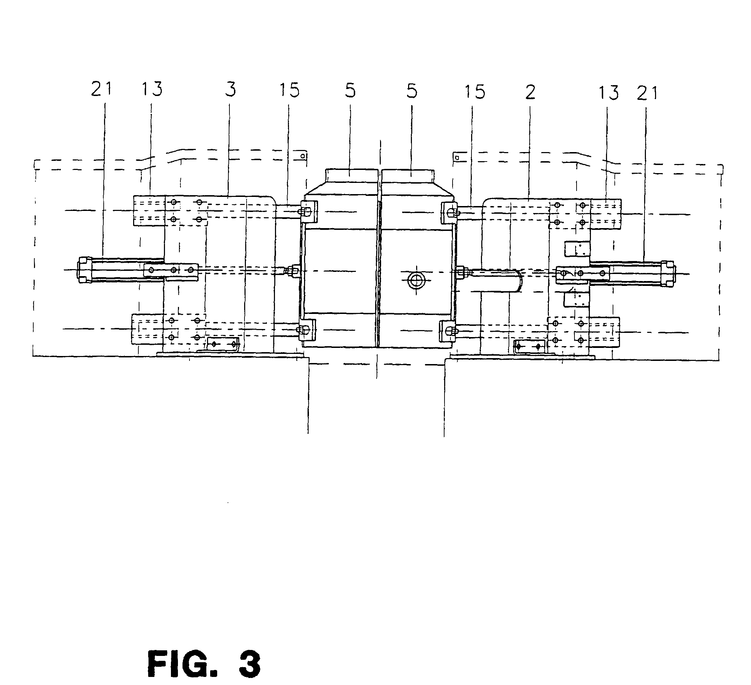

FIG. 3 - Elevation of operating installation - during steaming phase

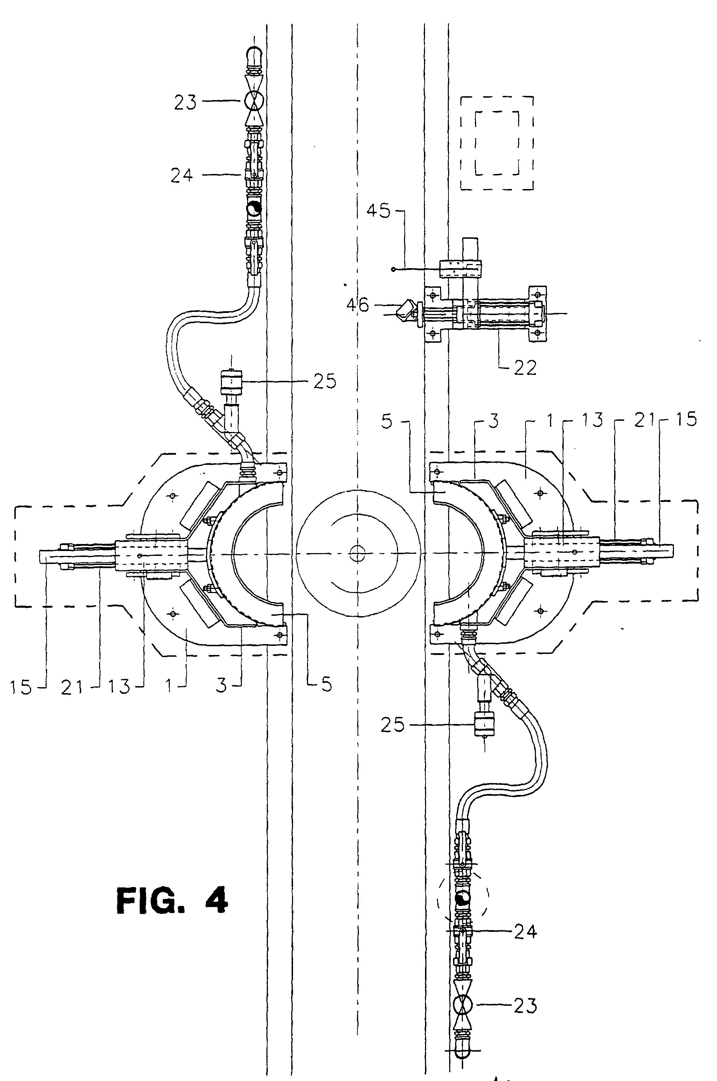

FIG. 4 - Plan of installation on standby

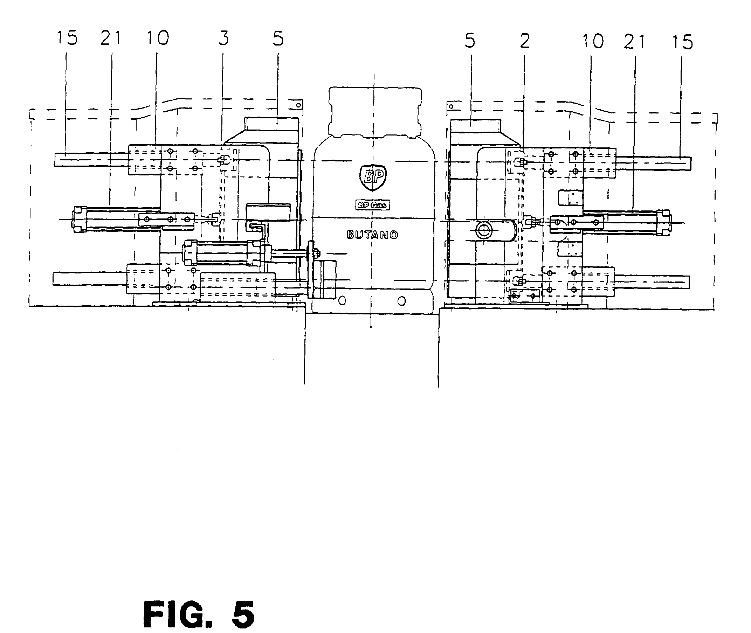

FIG. 5 - Elevation of installation on standby

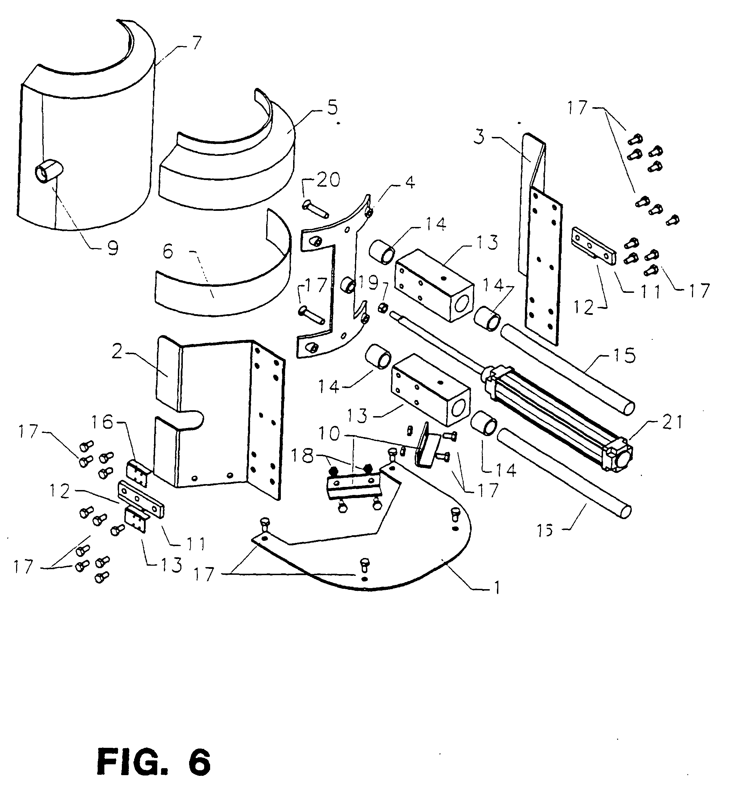

FIG. 6 - Exploded diagram of a twin unit

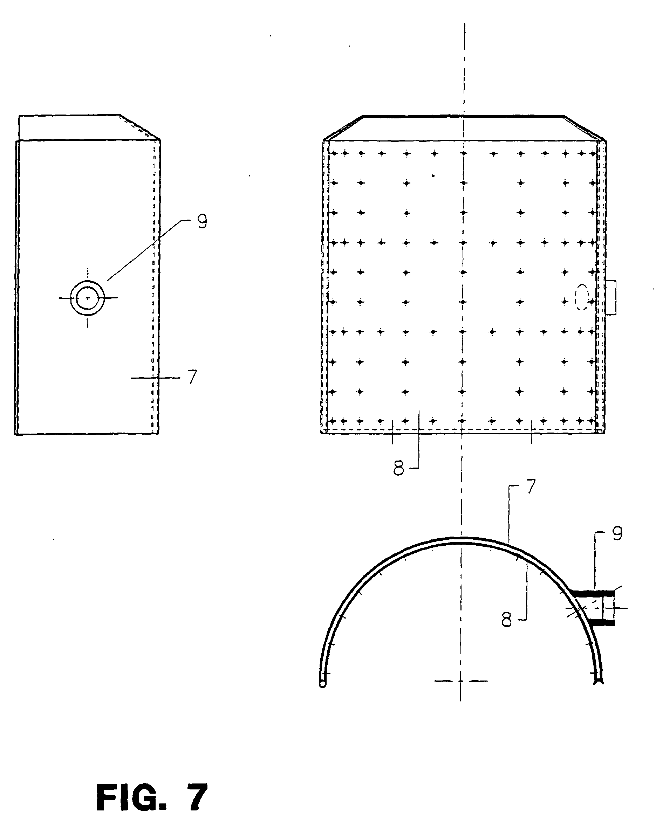

FIG. 7 - Steam chamber semicylinder (side and front elevation, plan)
FIG. 8 - Plan of equipment guard cover
FIG. 9 - Elevation of equipment guard cover
FIG. 10 - Perspective of brake at beginning of cycle
FIG. 11 - Assembly diagram for steam line draining system

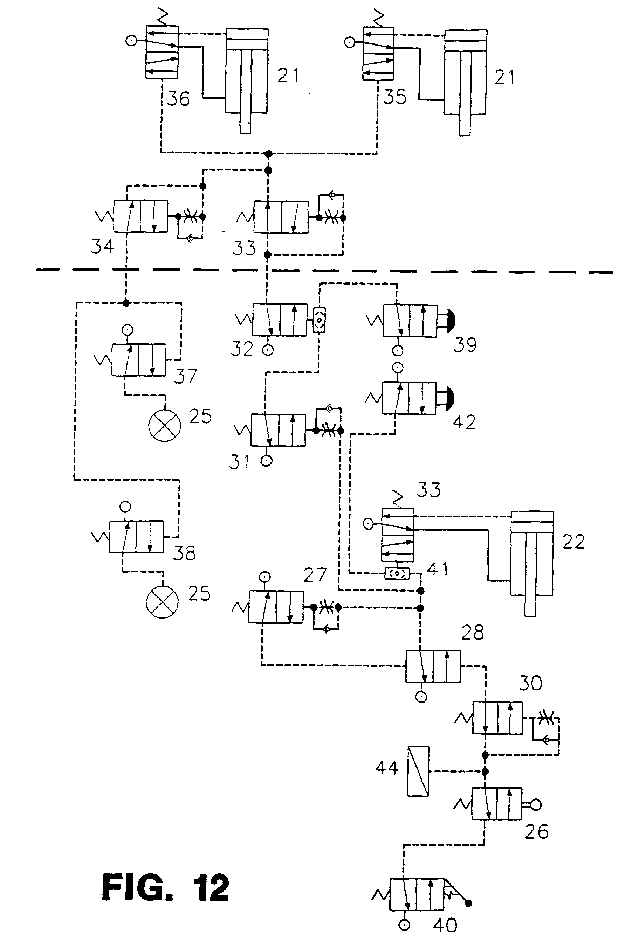

FIG. 12 -Diagram of steam circuit

### OPERATION.

As mentioned above, the cylinders are carried to the steam area by a conveyor and its various compressed air sensors control the flow of cylinders, first in the sleeve attaching area and then at the steam area entrance. These sensors are part of an automated system and are linked to the steam system. A timer controls the injection of steam into the chamber.

When information is received from a sensor that cylinder I has entered the steam area, a brake piston is operated by compressed air at the beginning of the cycle (Fig. 10), which restrains cylinder 2 on the conveyor so that another cylinder cannot force its way into the semicylinders. As the rod (45) driving the brake pushes back the stopper (46) and allows the cylinder to pass, two pistons (21) are automatically actuated which push the semicylinders against the cylinder with the sleeve already attached, totally surrounding it and gripping it. Steam, which meanwhile has been carried by the insulated pipe and the steam hose, is injected into the chamber formed by the junction of the two semicylinders through the holes in the perforated plate (8), causing it to stick to the outer walls of the cylinder. This process takes only 7/10^{th} second. At the end of that time the pistons (21) pull the semicylinders (7) back, releasing cylinder 1. At the same time the brake (FIG. 11), which was restraining the cylinder, is removed, releasing the cylinder and restarting the cycle.

| **LEGEND** | |
|---|---|
| **Ref.** | **Item** |
| 1 | Base plate |
| 2 | Left chamber guard |
| 3 | Right chamber guard |
| 4 | Chamber support |
| 5 | Steam chamber upper support |
| 6 | Steam chamber lower support |
| 7 | Steam chamber back plate |
| 8 | Steam chamber perforated plate |
| 9 | Steam hose connector |
| 10 | Chamber guard fitting |
| 11 | Pneumatic support |
| 12 | Pneumatic support device |
| 13 | Shaft bearing |
| 14 | Bush |
| 15 | Guiding shaft |
| 16 | Air compressed activators support |
| 17 | M10 hex head bolt |
| 18 | M10 hexagonal nut |
| 19 | M12 hexagonal nut |
| 20 | Guiding shaft fitting |
| 21 | Piston |
| 22 | 50 x 80 double effect |
| 23 | Automatic blow-off float valve - ¾ FF |
| 24 | Male spherical valve |
| 25 | Air compressed angular valve with conical seat - ¾ FF - stainless steel |
| 26 | 3/2 - 1/8 - MEC/C |
| 27 | Closed timer |
| 28 | 3/2 - 1/8 - P/P |
| 29 | 5/2 - 1/8 - P/M |
| 30 | Open timer |
| 31 | Closed timer |
| 32 | 3/2 - 1/8 - P/M |
| 33 | Open timer |
| 34 | Closed timer |
| 35 | 5/2 - 1/8 - P/M |
| 36 | 5/2 - 1/8 - P/M |
| 37 | 3/2 - 1/8 - P/M |
| 38 | 3/2 - 1/8 - P/M |
| 39 | 3/2 - Button/M |
| 40 | 3/2 - ON-OFF switch |
| 41 | "or" function |
| 42 | 3/2 - STOP interlock button |
| 43 | "or" function |
| 44 | Counter/ Meter |
| 45 | Brake driving rod |
| 46 | Rubber stopper |

## Claims

1. Device for the heat shrinking of thermoplastic sleeves on gas cylinders, **characterized by** using compressed air and steam as energy sources and to be employed on a bottle-by-bottle basis using a discontinuous injection of steam and without hitting the valve area, the device comprising basically two opposite twin units or subsystems (Fig. 1), which work simultaneously; each unit being made up of a back end plate (7) and a front perforated metal plate (8) which presents a concave surface facing the corresponding front plate of the opposite twin unit, the front perforated metal plate (8) acting as a water vapour outlet; both substantially semicylindrical units being driven by respective pistons (21), which push them against each other up to the point of contact where they form a heating chamber able to grip and surround a gas cylinder previously placed between the opposite front perforated metal plates by an automatically controlled conveyor; each unit or subsystem having means (9) for controlled supply of steam and an external protecting guard plate (2,3).

2. Device according to claim 1, **characterized by** each of the said twin units being comprised of : a base plate (1); a left guard plate (2) with a slit for fitting a steam pipe; a right guard plate (3); a unit fixing and support system (4,5,6); the said back end plate (7); the said front perforated plate (8); a steam pipe connection (9); the said piston (21); and a steam line.

3. Device according to claims 1 and 2, in which the steam line consists of an insulated cylinder and tubing with a hose to carry the steam to the consumption zone, where it enters the device through the said steam pipe connection (9) at a pressure of between 0.5 and 2.0 bars ; a liquid draining system being incorporated in the steam line.

4. Device according to claim 1, in which the said external protecting guard plate comprises a guard that protect and cover each of the twin units; the said guard consisting of a rectangular box (2,3) extending to the rear in a frustum shaped section, finished off with a lid; a slit for a steam pipe being cut into a side of the box.

5. Device according to claim 1, further comprising an infrastructure made up of a line for conveying the bottles to the steam area, that includes a compressed air admission sensor to control, upstream, the flow of gas cylinders in the sleeve placing area and, downstream, the admission into the shrinking area; the conveying line having a pneumatic brake (45), fitted with a piston (22), a rod (45) and stopper (46) to hold the cylinder and prevent another cylinder forcing entry into the steam area.

## Patentansprüche

1. Gehäusevorrichtung für Gasflaschen, mit Druckluft und Wasserdampf angetrieben, um Flasche um Flasche diskontinuierlich mit Wasserdampf zu injizieren, ohne dabei den Ventil-Bereich zu berühren. Sie setzt sich im wesentlichen aus zwei sich gegenüber stehenden, simultan arbeitenden Doppeleinheiten bzw. Teilkomponenten zusammen (1). Jede Einheit besteht aus einem Halbzylinder mit äusserem Blechgehäuse (7) und innerem, perforiertem Metallblechgehäuse (8), um den Wasserdampf auszulassen. Beide Einheiten werden durch Kolben (21) zusammengeschoben. Im Berührungsmoment umgreifen und umhüllen die Einheiten die Flasche und bilden eine Hitzekammer. Zuvor hat ein automatisch gesteuertes Förderband die Flasche zwischen die beiden Einheiten, in die Bedampfungs-Zone plaziert. Jede Einheit oder Teilkomponente ist an einen Wasserdampfkreislauf (12) angeschlossen und mit einem Schutzmantel umhüllt (8 und 9).

2. Die Anlage wie unter 1 umschrieben, **gekennzeichnet durch** die beiden Einheiten in die es sich unterteilt, setzt sich im wesentlichen wie folgt zusammensetzt:
- Bodenplatte (1)
- linken Schutzmantel (2) des Halbzylinders mit Schlitz **durch** die der Wasserdampfschlauch durchführt
- rechter Schutzmantel des Halbzylinders (3)
- Stütz- und Fixierungssystem der Einheit (4, 5, 6)
- Äusseres Blechgehäuse (7) des Halbzylinders
- Perforiertes Blechgehäuse (8) des Halbzylinders
- Wasserdampfanschluss (9)
- Kolben (21)
- Wasserdampfleitung

3. Gerät wie unter 1. und 2. umschrieben, bei dem sich die Wasserdampfleitung aus einem Kessel und einem Schlauch zusammensetzt, um den Dampf bis zum Anwendungsbereich zu leiten, von wo er bei einem Druck von 0,5 und 2 bar durch das Verbindungsstück (9) in das Gerät einströmt.
In den Kreislauf ist ein Ableitungssystem für das in der Dampfleitung entstandene Kondenswasser eingebaut.

4. Gerät wie unter 1. umschrieben, bei dem das äussere Gehäuse die jeweilige Doppeleinheit schützt und ummantelt. Diese Schutzhülle besteht aus einem rechtwinkligen Gehäuse (2, 3 oder 8, 9???), das sich auf der Rückseite als pyramidenförmiger Schacht fortsetzt, und den ein Deckel abschliesst. Seitlich im Gehäuse befindet sich ein Schlitz, um die Dampfleitung in den Innenraum zu führen.

5. Gerät wie unter 1. umschrieben, besteht des weiteren aus, einer Infrastruktur, einem Transportband, das die Flaschen bis zur Bedampfungszone befördert, einschliesslich eines mit Druckluft betriebenen Einlass-Sensors, der, bandaufwärts, den Zulauf der Gasflaschen in den Bereich wo das Gehäuse aufgesetzt wird, steuert, und bandabwärts den Einlass in die Hitzekammer.
In das Transportband ist auch eine Bremse (10) eingebaut, mit Kolben (22), Stange (45) und Anschlag oder Bremsklotz (46), angetrieben durch Druckluft, dazu bestimmt, die Flasche zu halten und somit zu verhindern, dass eine weitere Flasche in die Verdampfungszone vordringt.

## Revendications

1. Rétracteur d'Entournures pour Bouteilles de Gaz opérant par air comprimé et par vapeur d'eau afin de fonctionner de bouteille à bouteille avec injection de vapeur d'eau discontinue et sans atteindre la zone de la valve, dont l'équipement est essentiellement composé de deux unités identiques ou sous-systèmes placés face à face (Fig.1) et qui fonctionnent en simultané, composés chacun par un hémisphère constitué d'une plaque postérieure (7) et d'une plaque métallique perforée (8) en son intérieur pour la sortie de la vapeur d'eau, étant les deux hémisphères commandés par des pistons (21) qui les poussent à l'encontre l'un vers l'autre en formant sur le point de contact une chambre de pasteurisation embrassant et enveloppant la bouteille préalablement positionnée entre eux dans la zone de vaporisation par un système transporteur contrôlé automatiquement, ayant chaque unité ou sous-système associé un circuit de vapeur d'eau (Fig. 12) et un corps protecteur extérieur /Fig. 8 et 9).

2. Rétracteur d'Entournures comme mentionné en 1., **caractérisé par** chacune des deux unités auxquelles le système rétracteur proprement dit se divise, en étant essentiellement constitué par :
- Plaque de base (1)
- Protecteur gauche (2) de l'hémisphère avec déchirure pour emboîtage de l'entournure à vapeur
- Protecteur droit (3) de l'hémisphère
- Système de support et de fixation de l'hémisphère (4,5, et 6)
- Plaque postérieure de l'hémisphère (7)
- Plaque perforée de l'hémisphère (8)
- Liaison à la conduite de vapeur d'eau (9)
- Pistons (21)
- Ligne de vapeur d'eau

3. Rétracteur comme mentionné en 1 et 2 dans lequel, la ligne de vapeur d'eau est constituée par une chaudière et par une tuyauterie isolée par un tuyau pour le transport de la vapeur jusqu'à la zone de consommation et où celle-ci entre dans l'équipement par la pièce de liaison (9) à une pression entre 0,5 et 2 bar. Dans le circuit est monté un système de purge du liquide (Fig. 11) de la ligne de vapeur.

4. Rétracteur comme mentionné en 1., **caractérisé par** un protecteur extérieur qui protège et couvre chacune des unités identiques étant formé par une boîte rectangulaire (Fig. 8 et 9) qui continue à l'arrière par une section en forme de tronc pyramidal achevée par un couvercle. Littéralement, une entaille est ouverte dans la boîte (Fig. 9) pour l'entrée de la tuyauterie conductrice de la vapeur d'eau dans l'espace intérieur.

5. Rétracteur d'Entournures comme mentionné en 1., **caractérisé par** un équipement comprenant une infrastructure constituée par une ligne de transport de bouteilles jusqu'à la zone de vaporisation, intégrant un détecteur d'admission à air comprimé de mode à contrôler, en amont, le flux des bouteilles dans la zone d'emplacement des entournures et à l'aval, l'entrée dans la zone de pasteurisation. Dans la ligne de transport, un frein est aussi placé (Fig. 10) doté d'un piston (22), d'un barreau (45) ou d'une cale (46), actionnant l'air comprimé, destiné à assurer la bouteille en évitant de forcer l'entrée à plus d'une bouteille dans la zone de vaporisation.
